# EUROPEAN PATENT APPLICATION

(11) **EP 4 775 371 A1**
(43) Date of publication of application: **15.07.2026**
(21) Application number: 24862584.0
(22) Date of filing: 21.08.2024
(51) Int. Cl.: B29B 17/00

(54) **DEVICE FOR SORTING ADHESIVE AND BASE MATERIAL**

(30) Priority: 05.09.2023 JP 2023143883
(71) Applicant: Nitto Denko Corporation, Ibaraki-shi, Osaka 567-8680 (JP)
(72) Inventor: NOMURA, Takayuki, Ibaraki-shi, Osaka 567-8680 (JP); KOTANI, Chihiro, Ibaraki-shi, Osaka 567-8680 (JP); YAMADA, Yosuke, Ibaraki-shi, Osaka 567-8680 (JP); YAMAMOTO, Akiyoshi, Ibaraki-shi, Osaka 567-8680 (JP)
(74) Representative: Hoffmann Eitle
(86) International application number: PCT/JP2024/029720
(87) International publication number: WO 2025/052930

(57) **Abstract**

Provided is a device for easily sorting, from a mixture including a pressure-sensitive adhesive and a substrate, the pressure-sensitive adhesive and the substrate.

The sorting device according to an embodiment of the present invention for sorting a pressure-sensitive adhesive and a substrate is a device for sorting, from a mixture (A) including a pressure-sensitive adhesive and a substrate, the pressure-sensitive adhesive and the substrate, and includes: a stirring tank including a first lateral face and a second lateral face facing each other and extending in a longitudinal direction, a third lateral face and a fourth lateral face facing each other and extending in a width direction, and a bottom face; a stirring unit for stirring the mixture (A) in the stirring tank; a first liquid supply unit configured to supply a first liquid into the stirring tank; a pressure-sensitive adhesive discharge portion configured to discharge the pressure-sensitive adhesive together with a liquid from an upper part of the first lateral face of the stirring tank; a pressure-sensitive adhesive recovery unit configured to recover the pressure-sensitive adhesive discharged through the pressure-sensitive adhesive discharge portion; and a substrate recovery unit configured to recover the substrate from the stirring tank.

## Description

### TECHNICAL FIELD

The present invention relates to a sorting device for sorting a pressure-sensitive adhesive and a substrate.

### BACKGROUND ART

A large quantity of pressure-sensitive adhesive tape is used for putting labels or the like on articles and wrapping materials, for packing with packing materials, in a manufacturing process of electrical parts or optical parts, for masking, etc. An amount of pressure-sensitive adhesive tape used in manufacturing process of electrical parts or optical parts has been increasing particularly in recent years, a large amount of waste of pressure-sensitive adhesive tape is produced at, for example, manufacturing sites.

Waste of pressure-sensitive adhesive tape is commonly burned and disposed or brought to waste disposal facilities and disposed. However, such disposal is not preferred from the viewpoint of environmental load reduction and resource circulation.

In view of the above circumstances, it is necessary to reduce such disposal of waste of pressure-sensitive adhesive tape as much as possible and reuse resources. Recycling of pressure-sensitive adhesive tape materials is one possible means of reducing disposal of pressure-sensitive adhesive tape. Establishment of a technology of recycling pressure-sensitive adhesive tape materials is conducive to, for example, reduction of CO₂ emissions from fossil resource extraction, and can also be very effective in terms of solving the climate change problem.

Pressure-sensitive adhesive materials are typically pressure-sensitive adhesives and substrates. A pressure-sensitive adhesive tape is obtained by producing a pressure-sensitive adhesive on a substrate typically by dissolving a polymer (which may be referred to as a base polymer) and an additive, such as a crosslinking agent, suitable for the purpose in a solvent to give a pressure-sensitive adhesive composition, applying the pressure-sensitive adhesive composition to the substrate, performing heating, drying, or the like as necessary, and allowing a crosslinking reaction to progress (e.g., Patent Literature 1).

### CITATION LIST

### Patent Literature

Patent Literature 1: JP 2021-175796 A

### SUMMARY OF INVENTION

### Technical Problem

An object of the present invention is to provide a device for easily sorting, from a mixture including a pressure-sensitive adhesive and a substrate, the pressure-sensitive adhesive and the substrate.

### Solution to Problem

[1] A sorting device according to an embodiment of the present invention for sorting a pressure-sensitive adhesive and a substrate is a sorting device for sorting, from a mixture (A) including a pressure-sensitive adhesive and a substrate, the pressure-sensitive adhesive and the substrate, the sorting device including:
   a stirring tank including a first lateral face and a second lateral face facing each other and extending in a longitudinal direction, a third lateral face and a fourth lateral face facing each other and extending in a width direction, and a bottom face;
   a stirring device for stirring the mixture (A) in the stirring tank;
   a first liquid supply unit configured to supply a first liquid into the stirring tank;
   a pressure-sensitive adhesive discharge portion configured to discharge the pressure-sensitive adhesive together with a liquid from an upper part of the first lateral face of the stirring tank;
   a pressure-sensitive adhesive recovery unit configured to recover the pressure-sensitive adhesive discharged through the pressure-sensitive adhesive discharge portion; and
   a substrate recovery unit configured to recover the substrate from the stirring tank.
[2] In the sorting device according to [1], the first liquid supply unit may be disposed so as to supply the first liquid into the stirring tank from above the stirring tank.
[3] In the sorting device according to [1] or [2], the first liquid supply unit may be disposed on a side at the first lateral face or a side at the second lateral face.
[4] In the sorting device according to any one of [1] to [3], the first liquid supply unit may include a plurality of first liquid supply ports.
[5] In the sorting device according to any one of [1] to [4], the stirring device may enable stirring by a liquid stream generated by supplying a second liquid from a second liquid supply unit into the stirring tank.
[6] In the sorting device according to [5], the second liquid supply unit may be disposed on a side at the first lateral face or a side at the second lateral face.
[7] In the sorting device according to [5] or [6], the second liquid supply unit may include a plurality of second liquid supply ports horizontally oriented.
[8] In the sorting device according to [5] or [6], the first liquid supply unit may be disposed on the side at the second lateral face, and the second liquid supply unit is disposed on the side at the first lateral face.
[9] The sorting device according to any one of [5] to [8] may include a control unit configured to control an amount of the first liquid to be supplied from the first liquid supply unit and an amount of the second liquid to be supplied from the second liquid supply unit.
[10] In the sorting device according to any one of [1] to [9], the pressure-sensitive adhesive discharge portion may be a cutout provided to the upper part of the first lateral face.
[11] In the sorting device according to any one of [5] to [10], a liquid discharged through the pressure-sensitive adhesive discharge portion may be recycled into at least one selected from the group consisting of the first liquid and the second liquid.
[12] In the sorting device according to any one of [1] to [11], the pressure-sensitive adhesive recovery unit includes a separation member configured to recover the pressure-sensitive adhesive discharged through the pressure-sensitive adhesive discharge portion and a recovery tank configured to store the liquid discharged through the pressure-sensitive adhesive discharge portion, and at least a portion of the separation member is immersed in the liquid.

### Advantageous Effects of Invention

According to the present invention, a device for easily sorting, from a mixture including a pressure-sensitive adhesive and a substrate, the pressure-sensitive adhesive and the substrate can be provided.

### BRIEF DESCRIPTION OF DRAWINGS

FIG. 1 is a schematic diagram illustrating a sorting device according to one embodiment of the present invention for sorting a pressure-sensitive adhesive and a substrate, as viewed from the side at a first lateral face.
FIG. 2 is a schematic plan view showing the sorting device according to the embodiment of the present invention for sorting a pressure-sensitive adhesive and a substrate, as viewed from above.
FIG. 3 is a cross-sectional view along line A-A shown in FIG. 1, and is a schematic cross-sectional view showing the sorting device according to the embodiment of the present invention for sorting a pressure-sensitive adhesive and a substrate, as viewed from the side at a third lateral face.
FIG. 4 is a schematic side view showing the sorting device according to the embodiment of the present invention for sorting a pressure-sensitive adhesive and a substrate, as viewed from the side at the first lateral face.

### DESCRIPTION OF EMBODIMENTS

A typical embodiment of the present invention will be described hereinafter. The embodiment described below is just a typical example of the present invention, and the present invention is not limited to the embodiment described below.

A sorting device according to an embodiment of the present invention for sorting a pressure-sensitive adhesive and a substrate is a device for sorting, from a mixture (A) including a pressure-sensitive adhesive and a substrate, the pressure-sensitive adhesive and the substrate.

### <<<<Mixture (A)>>>>

The mixture (A) to be sorted using the sorting device according to the embodiment of the present invention for sorting a pressure-sensitive adhesive and a substrate will be described. The mixture (A) is required to include a pressure-sensitive adhesive and a substrate, and may be a mixture of a pressure-sensitive adhesive and a substrate or a mixture of a pressure-sensitive adhesive, a substrate, and an appropriate additional component. Such an additional component is, for example, an organic solvent. For the mixture (A), an appropriate composition and an appropriate content therein can be adopted unless the effect of the present invention is impaired.

An appropriate pressure-sensitive adhesive can be adopted as the pressure-sensitive adhesive unless the effect of the present invention is impaired. The pressure-sensitive adhesive may be composed of only one pressure-sensitive adhesive, or may be composed of two or more pressure-sensitive adhesives. The pressure-sensitive adhesive is, for example, an acrylic adhesive, a silicone pressure-sensitive adhesive, a urethane pressure-sensitive adhesive, or a rubber pressure-sensitive adhesive, and is typically an acrylic adhesive.

An appropriate acrylic pressure-sensitive adhesive can be adopted as the acrylic pressure-sensitive adhesive unless the effect of the present invention is impaired. The acrylic pressure-sensitive adhesive is typically an acrylic pressure-sensitive adhesive as waste (sometimes referred to as "wasted acrylic pressure-sensitive adhesive"). Examples of the wasted acrylic pressure-sensitive adhesive include an acrylic pressure-sensitive adhesive included in an acrylic pressure-sensitive adhesive tape recovered after use, a mixture including an acrylic pressure-sensitive adhesive obtained by subjecting an acrylic pressure-sensitive adhesive tape recovered after use to an appropriate treatment, an acrylic pressure-sensitive adhesive residue left on an adherend after peeling an acrylic pressure-sensitive adhesive tape from the adherend, and an acrylic pressure-sensitive adhesive adhered to acrylic pressure-sensitive adhesive production equipment.

An appropriate substrate can be adopted as the substrate unless the effect of the present invention is impaired. The substrate may be composed of only one substrate, or may be composed of two or more substrates. The substrate is typically a substrate included in a pressure-sensitive adhesive tape.

An appropriate substrate can be adopted as the substrate unless the effect of the present invention is impaired. The substrate is typically a substrate as waste (sometimes referred to as "wasted substrate"). Examples of the waste substrate include a substrate included in a pressure-sensitive adhesive tape recovered after use and a mixture including a substrate obtained by subjecting a pressure-sensitive adhesive tape recovered after use to an appropriate treatment.

An appropriate material can be adopted as a material of the substrate unless the effect of the present invention is impaired. The material of the substrate is typically a resin material.

Examples of the resin material as the material of the substrate include polyimide (PI), polyetheretherketone (PEEK), polyethylene terephthalate (PET), polyethylene naphthalate (PEN), polybutylene terephthalate (PBT), acrylic resins such as polymethyl methacrylate (PMMA), polycarbonate, triacetyl cellulose (TAC), polysulfone, polyarylate, polyethylene (PE), polypropylene (PP), an ethylene-propylene copolymer, an ethylenevinyl acetate copolymer (EVA), a polyamide (nylon), a fully aromatic polyamide (aramid), polyvinyl chloride (PVC), polyvinyl acetate, polyphenylene sulfide (PPS), fluorine resin, and a cyclic olefin polymer.

The mixture (A) may be obtained by any method. One embodiment of the mixture (A) is a mixture obtained by impregnating a pressure-sensitive adhesive tape including the pressure-sensitive adhesive and the substrate with a pressure-sensitive adhesive treatment solution containing an organic solvent. The phrase "impregnating the pressure-sensitive adhesive tape with the pressure-sensitive adhesive treatment solution" as used herein means creating a state where the pressure-sensitive adhesive included in the pressure-sensitive adhesive tape is allowed to be impregnated with the pressure-sensitive adhesive treatment solution, and is, for example, creating a state where at least a portion of the pressure-sensitive adhesive is immersed in the pressure-sensitive adhesive treatment solution. A state where at least a portion of the pressure-sensitive adhesive is immersed in the pressure-sensitive adhesive treatment solution allows the pressure-sensitive adhesive treatment solution to penetrate the pressure-sensitive adhesive. Therefore, the entire pressure-sensitive adhesive tape may be immersed in the pressure-sensitive adhesive treatment solution, or at least a portion of the pressure-sensitive adhesive tape may be immersed in the pressure-sensitive adhesive treatment solution, the portion including at least a portion of the pressure-sensitive adhesive.

In a typical embodiment of the mixture (A), the pressure-sensitive adhesive is impregnated with an organic solvent (hereinafter referred to as "organic solvent-impregnated pressure-sensitive adhesive"). That is, one typical embodiment of the mixture (A) includes a pressure-sensitive adhesive, a substrate, and an organic solvent, and the pressure-sensitive adhesive is an organic solvent-impregnated pressure-sensitive adhesive in which the pressure-sensitive adhesive is impregnated with at least a portion of an organic solvent. It should be noted that the amount of the organic solvent impregnated in the organic solvent-impregnated pressure-sensitive adhesive can vary depending on factors such as the type and the amount of the pressure-sensitive adhesive, the type and the amount of the organic solvent, the composition of the pressure-sensitive adhesive treatment solution, and conditions for impregnation with the pressure-sensitive adhesive treatment solution.

### <<<<Sorting Device>>>>

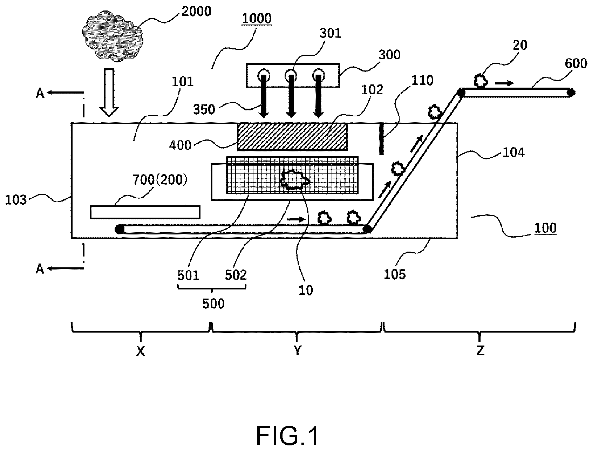

The sorting device according to the embodiment of the present invention for sorting a pressure-sensitive adhesive and a substrate will be described on the basis of FIGS. 1 to 4. However, the sorting device of the present invention is not limited to the description based on FIGS. 1 to 4.

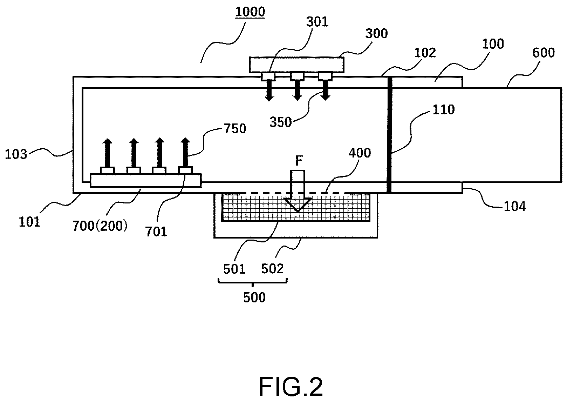

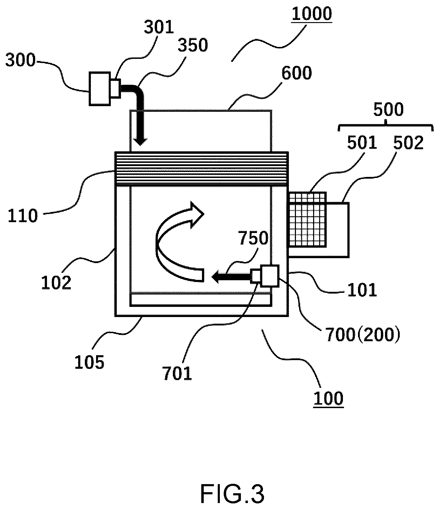

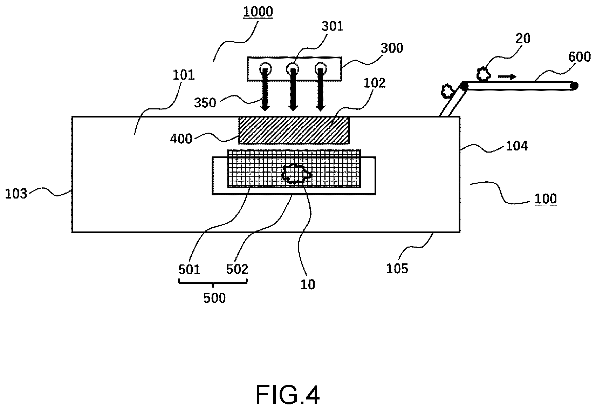

FIG. 1 is a schematic diagram illustrating a sorting device 1000 according to one embodiment of the present invention for sorting a pressure-sensitive adhesive and a substrate, as viewed from a side of a stirring tank 100 at a first lateral face 101. FIG. 2 is a schematic plan view showing the sorting device 1000 according to the embodiment of the present invention for sorting a pressure-sensitive adhesive and a substrate, as viewed from above. FIG. 3 is a cross-sectional view along line A-A shown in FIG. 1, and is a schematic cross-sectional view showing the sorting device 1000 according to the embodiment of the present invention for sorting a pressure-sensitive adhesive and a substrate, as viewed from a side of the stirring tank 100 at a third lateral face 103. FIG. 4 is a schematic side view showing the sorting device 1000 according to the embodiment of the present invention for sorting a pressure-sensitive adhesive and a substrate, as viewed from the side of the stirring tank 100 at the first lateral face 101.

As shown in FIGS. 1 to 4, the sorting device 1000 according to the embodiment of the present invention for sorting a pressure-sensitive adhesive and a substrate includes: the stirring tank 100; a stirring device 200 for stirring the mixture (A) 2000 in the stirring tank 100; a first liquid supply unit 300 configured to supply a first liquid 350 into the stirring tank 100; a pressure-sensitive adhesive discharge portion 400 configured to discharge a pressure-sensitive adhesive 10 together with a liquid from an upper portion of the first lateral face 101 of the stirring tank 100; a pressure-sensitive adhesive recovery unit 500 configured to recover the pressure-sensitive adhesive 10 discharged through the pressure-sensitive adhesive discharge portion 400; and a substrate recovery unit 600 configured to recover a substrate 20 from the stirring tank 100.

In the sorting device 1000 according to the embodiment of the present invention for sorting a pressure-sensitive adhesive and a substrate, the mixture (A) 2000 is sufficiently loosened by stirring the mixture (A) 2000 in the stirring tank 100 using the stirring device 200 to separate the pressure-sensitive adhesive 10 and the substrate 20, and then the first liquid 350 is supplied into the stirring tank 100 from the first liquid supply unit 300 so as to cause the pressure-sensitive adhesive 10 floating in an upper portion of the stirring tank 100 to overflow together with the liquid through the pressure-sensitive adhesive discharge portion 400, thereby recovering the pressure-sensitive adhesive 10. Furthermore, the substrate 20 separated in the stirring tank 100, which is not discharged through the pressure-sensitive adhesive discharge portion 400, sinks to a lower portion of the stirring tank 100 and is recovered by the substrate recovery unit 600. As shown above, in the sorting device 1000 according to the embodiment of the present invention for sorting the pressure-sensitive adhesive 10 and the substrate 20, the pressure-sensitive adhesive 10 and the substrate 20 can be easily sorted out from the mixture (A) including the pressure-sensitive adhesive 10 and the substrate 20 by separately providing area X in which the mixture (A) 2000 is sufficiently loosened to separate the pressure-sensitive adhesive 10 and the substrate 20, pressure-sensitive adhesive recovery area Y in which the pressure-sensitive adhesive 10 is recovered by causing the liquid containing the pressure-sensitive adhesive 10 to overflow, and substrate recovery area Z in which the substrate 20 left until last is recovered. As shown in FIGS. 1 to 3, a partition plate 110 may be provided in the stirring tank 100 so that the pressure-sensitive adhesive 10 and the substrate 20 separated from each other do not mix.

In terms of enabling further exhibition of the effect of the present invention, it is preferable that, in pressure-sensitive adhesive recovery area Y, the pressure-sensitive adhesive 10 float to the upper portion of the stirring tank 100 and the substrate 20 sink to the lower portion of the stirring tank 100, and typically, it is more preferable that, in pressure-sensitive adhesive recovery area Y, the specific gravity of the pressure-sensitive adhesive 10 (which may be an organic solvent-impregnated pressure-sensitive adhesive) be lower than that of the liquid in the stirring tank 100 and the specific gravity of the substrate 20 is higher than that of the liquid in the stirring tank 100.

The stirring tank 100 includes the first lateral face 101 and a second lateral face 102 facing each other and extending in a longitudinal direction, the third lateral face 103 and a fourth lateral face 104 facing each other and extending in a width direction, and a bottom face 105.

The mixture (A) 2000 can be added into the stirring tank 100 by an appropriate method. In one embodiment, as shown in FIG. 1, the mixture (A) 2000 is added from above on the side of the stirring tank 100 at the third lateral face 103.

Unless the effect of the present invention is impaired, an appropriate stirring device can be adopted as the stirring device 200 as long as stirring of the mixture (A) 2000 in the stirring tank 100 can be achieved thereby. The stirring device 200 enables, for example, stirring by a liquid stream generated by supplying a second liquid 750 into the stirring tank 100 from a second liquid supply unit 700, stirring using a stirring blade, or stirring by a liquid stream generated by compressed air bubbling.

The stirring device 200 preferably enables, as shown in FIGS. 1 to 3, stirring by a liquid stream generated in the stirring tank 100 by supplying the second liquid 750 from the second liquid supply unit 700 in terms of sufficient loosening of the mixture (A) 2000, high maintainability such as suppression of adhesion of the mixture (A) 2000, high stirring performance, a low cost, and so on. Herein, stirring by a liquid stream generated in the stirring tank 100 by supplying the second liquid 750 from the second liquid supply unit 700 refers to stirring of the mixture (A) 2000 by means of a liquid stream (e.g., a crock-wise stream as shown in FIG. 3) produced in the stirring tank 100 by supplying the second liquid 750 from the second liquid supply unit 700 provided in the stirring tank 100.

The second liquid supply unit 700 may be disposed on the side at the first lateral face 101 or the side at the second lateral face 102 in the stirring tank 100. The second liquid supply unit 700 is preferably disposed on the side at the first lateral face 101 in that the effect of the present invention can be further exhibited. FIGS. 1 to 3 show a case where the second liquid supply unit 700 is disposed on the side at the first lateral face 101.

The second liquid supply unit 700 may include a plurality of second liquid supply ports 701 horizontally oriented. The second liquid supply unit 700 including the plurality of horizontally oriented second liquid supply ports 701 can efficiently generate a powerful liquid stream.

In terms of enabling further exhibition of the effect of the present invention, the second liquid supply unit 700 is more preferably disposed in the lower portion of the stirring tank 100 on the side at the first lateral face 101 such that the second liquid supply ports 701 are horizontally oriented toward the second lateral face 102.

A supply velocity of the second liquid 750 from the second liquid supply unit 700 may be determined as appropriate taking into account the structure and the size of the stirring tank 100, the structure and the size of the second liquid supply unit 700, and the like, unless the effect of the present invention is impaired. The supply velocity is, for example, 1 m/min to 1500 m/min and preferably 10 m/min to 500 m/min for each second liquid supply port 701.

The first liquid supply unit 300 is configured to supply the first liquid 350 into the stirring tank 100. As shown in FIGS. 1 to 4, the first liquid supply unit 300 is disposed to supply the first liquid 350 into the stirring tank 100 from above the stirring tank 100 in that the effect of the present invention can be further exhibited.

The pressure-sensitive adhesive 10 can be efficiently discharged through the pressure-sensitive adhesive discharge portion 400 by supplying the first liquid 350 into the stirring tank 100 from the first liquid supply unit 300 and thereby causing the pressure-sensitive adhesive 10 to overflow together with the liquid.

The first liquid supply unit 300 may be disposed on the side at the first lateral face 101 or the side at the second lateral face 102. The first liquid supply unit 300 is preferably disposed on the side at the second lateral face 102 in that the effect of the present invention can be further exhibited. FIGS. 1 to 4 show a case where the first liquid supply unit 300 is disposed on the side at the second lateral face 102.

The first liquid supply unit 300 may include a plurality of first liquid supply ports 301. Since the first liquid supply unit 300 includes the plurality of first liquid supply ports 301, the pressure-sensitive adhesive can be more efficiently discharged through the pressure-sensitive adhesive discharge portion 400 by causing the pressure-sensitive adhesive 10 to overflow together with the liquid. The first liquid supply port 301 can be oriented in an appropriate direction, such as horizontally or vertically, unless the effect of the present invention is impaired.

A supply velocity of the first liquid 350 from the first liquid supply unit 300 may be determined as appropriate taking into account the structure and the size of the stirring tank 100, the structure and the size of the first liquid supply unit 300, and the like, unless the effect of the present invention is impaired. The supply velocity is, for example, 1 m/min to 600 m/min and preferably 10 m/min to 300 m/min for each first liquid supply port 301.

The pressure-sensitive adhesive discharge portion 400 is configured to discharge the pressure-sensitive adhesive 10 with the liquid from the upper portion of the first lateral face 101 of the stirring tank 100. As described above, the pressure-sensitive adhesive 10 can be efficiently discharged through the pressure-sensitive adhesive discharge portion 400 by supplying the first liquid 350 into the stirring tank 100 from the first liquid supply unit 300 and thereby causing the pressure-sensitive adhesive 10 to overflow together with the liquid (in an arrow F direction in FIG. 2).

The pressure-sensitive adhesive discharge portion 400 is typically a cutout provided to the upper portion of the first lateral face 101 as shown in FIGS. 1, 2, and 4.

The pressure-sensitive adhesive recovery unit 500 is disposed, as shown in FIGS. 1 to 4, so as to recover the pressure-sensitive adhesive 10 caused to overflow together with the liquid and thereby discharged through the pressure-sensitive adhesive discharge portion 400. The pressure-sensitive adhesive recovery unit 500 is typically coupled to the stirring tank 100 through the pressure-sensitive adhesive discharge portion 400.

In terms of enabling further exhibition of the effect of the present invention, the pressure-sensitive adhesive recovery unit 500 includes: a separation member 501 configured to recover the pressure-sensitive adhesive 10 discharged through the pressure-sensitive adhesive discharge portion 400; and a recovery tank 502 configured to store the liquid discharged through the pressure-sensitive adhesive discharge portion 400, and at least a portion of the separation member 501 is immersed in the liquid. In a typical example of the pressure-sensitive adhesive recovery unit 500, as shown in FIGS. 1 to 4, the separation member 501 that is a cage-like member is left to stand inside the recovery tank 502. As shown in FIGS. 1 to 4, the pressure-sensitive adhesive recovery unit 500 is disposed so that a mixture of the pressure-sensitive adhesive 10 and the liquid caused to overflow and thereby discharged through the pressure-sensitive adhesive discharge portion 400 can be added into the cage-like separation member 501. A member enabling solid-liquid separation will be adopted as such a separation member, and such a separation member is, for example, a cage-like metal mesh.

Since the pressure-sensitive adhesive recovery unit 500 includes, as described above, the separation member 501 configured to recover the pressure-sensitive adhesive 10 discharged through the pressure-sensitive adhesive discharge portion 400 and the recovery tank 502 configured to store the liquid discharged through the pressure-sensitive adhesive discharge portion 400 and at least a portion of the separation member 501 is immersed in the liquid, the mixture of the pressure-sensitive adhesive 10 and the liquid caused to overflow and discharged through the pressure-sensitive adhesive discharge portion 400 is added into the cage-like separation member 501 and the pressure-sensitive adhesive 10 stays inside the cage-like separation member 501. The separation member 501 has the advantage of being less likely to be clogged with the pressure-sensitive adhesive 10 because at least a portion of the separation member 501 is immersed in the liquid in the recovery tank 502.

Finally, the pressure-sensitive adhesive 10 can be efficiently sorted out by an operation of separating the pressure-sensitive adhesive 10 in the cage-like separation member 501 and the liquid in the recovery tank 502, such as lifting the cage-like separation member 501.

The liquid discharged through the pressure-sensitive adhesive discharge portion 400, typically the liquid stored in the recovery tank 502, can be recycled into at least one selected from the group consisting of the first liquid 350 and the second liquid 750. Sorting of the pressure-sensitive adhesive 10 and the substrate 20 can be achieved at low cost by such recycling. The recycling method is, for example, a recycling method in which an operation, such as composition adjustment, is performed as appropriate according to differences in the compositions of the liquid discharged through the pressure-sensitive adhesive discharge portion 400, the first liquid 350, and the second liquid 750.

The sorting device 1000 according to the embodiment of the present invention for sorting a pressure-sensitive adhesive and a substrate may include a control unit configured to control an amount of the first liquid 350 to be supplied from the first liquid supply unit 300 and an amount of the second liquid 750 to be supplied from the second liquid supply unit 700. This control unit enables appropriately coordinated control of the amounts of the first liquid 350 and the second liquid 750 to be supplied and more efficient sorting of the pressure-sensitive adhesive 10 and the substrate 20.

Examples of the first liquid 350 include water, alcohols, hydrocarbons, esters, ketones, halogen compounds, and liquid mixtures thereof. Examples of the alcohols include methanol, ethanol, 1-propanol, 2-propanol (IPA), 1-butanol, 1-pentanol, 1-hexanol, benzyl alcohol, diethylene glycol, and dipropylene glycol. Examples of the hydrocarbons include benzene, toluene, styrene, hexane, cyclohexane, heptane, and methylcyclohexane. Examples of the esters include ethyl acetate. Examples of the ketones include acetone. Examples of the halogen compounds include chloroform and tetrachloride carbon.

Examples of the second liquid 750 include water, alcohols, hydrocarbons, esters, ketones, halogen compounds, and liquid mixtures thereof. Examples of the alcohols include methanol, ethanol, 1-propanol, 2-propanol (IPA), 1-butanol, 1-pentanol, 1-hexanol, benzyl alcohol, diethylene glycol, and dipropylene glycol. Examples of the hydrocarbons include benzene, toluene, styrene, hexane, cyclohexane, heptane, and methylcyclohexane. Examples of the esters include ethyl acetate. Examples of the ketones include acetone. Examples of the halogen compounds include chloroform and tetrachloride carbon.

The substrate recovery unit 600 is configured to recover the substrate 20 from the stirring tank 100. In the sorting device 1000 according to the embodiment of the present invention for sorting a pressure-sensitive adhesive and a substrate, the pressure-sensitive adhesive 10 and the substrate 20 are separated by stirring the mixture (A) 2000 in the stirring tank 100 using the stirring device 200. While the separated pressure-sensitive adhesive 10 is recovered, as described above, by causing the pressure-sensitive adhesive 10 to overflow together with the liquid through the pressure-sensitive adhesive discharge portion 400, the separated substrate 20 can sink to the lower portion of the stirring tank 100. The substrate 20 that has sunk to the lower portion of the stirring tank 100 is recovered by the substrate recovery unit 600.

An appropriate structure and an appropriate device can be adopted for the substrate recovery unit 600 as long as the substrate recovery unit 600 can recover the substrate 20 accumulating in the lower portion of the stirring tank 100, unless the effect of the present invention is impaired. The substrate recovery unit 600 is, for example, a belt conveyor-type conveying and recovering device as shown in FIGS. 1 to 4.

### EXAMPLES

Hereinafter, the present invention will be described in detail with examples. The present invention is not limited to these examples.

### [Production Example 1]: Preparation of Mixture (A) of Pressure-Sensitive Adhesive and Substrate

Acrylic pressure-sensitive adhesive tape (manufactured by Nitto Denko Corporation under the product name "No.3195MS"; foamed) was cut into a 20 mm × 20 mm piece to give a pressure-sensitive adhesive tape sample.

Potassium hydroxide was added at a concentration of 2.6 wt% to a mixed solution containing 1-butanol and water in a volume ratio of 12.1% to 87.9% to prepare a pressure-sensitive adhesive treatment solution.

The pressure-sensitive adhesive treatment solution was heated to 70°C, and the pressure-sensitive adhesive tape sample was added thereto at 20% by weight relative to the pressure-sensitive adhesive treatment solution. These were added to a pale (airtight container), and were stirred for 30 minutes using a pale stirring device (manufactured by MISUGI LTD. under the product name "Mazemazeman"). After that, solid-liquid separation was performed using a filter or the like to give a mixture (A) as a solid phase.

The mixture (A) obtained was a mixture in which the acrylic adhesive and the PET substrate were entangled.

### [Example 1]

From the mixture (A) including the pressure-sensitive adhesive and the substrate, the pressure-sensitive adhesive and the substrate were sorted out using a sorting device according to one embodiment of the present invention for sorting a pressure-sensitive adhesive and a substrate.

As shown in FIGS. 1 to 4, the sorting device includes: a stirring tank (longitudinal direction: 100 cm, width direction: 65 cm, depth: 45 cm) including a first lateral face and a second lateral face facing each other and extending in the longitudinal direction, a third lateral face and a fourth lateral face facing each other and extending in the width direction, a bottom face, and a pressure-sensitive adhesive discharge portion (longitudinal direction: 40 cm, depth direction: 6 cm) being a cutout provided at a position in an upper portion of the first lateral face, the position facing a first liquid supply unit; a second liquid supply unit disposed in a lower portion of the stirring tank on the side at the first lateral face such that 18 second liquid supply ports (each second liquid supply port has a diameter of ⌀3) are horizontally oriented toward the second lateral face; the first liquid supply unit disposed in an upper portion of the stirring tank on the side at the second lateral face 102 such that one first liquid supply port (the first liquid supply port has a diameter of ⌀20) is horizontally oriented toward the first lateral face; a pressure-sensitive adhesive recovery unit coupled to the stirring tank through the pressure-sensitive adhesive discharge portion; and a substrate recovery unit configured to recover a substrate that has sunk to the lower portion of the stirring tank.

In the pressure-sensitive adhesive recovery unit, as shown in FIGS. 1 to 4, a cage-like metal mesh filter (longitudinal direction: 45 cm, width direction: 25 cm, depth: 40 cm) is left to stand as a separation member in a recovery tank (longitudinal direction: 50 cm, width direction: 35 cm, depth: 40 cm).

First, the stirring tank was filled with a liquid mixture of water and 1-butanol (water:1-butanol = 92:8 by weight) as a second liquid to a level 10 cm below the upper end of the stirring tank. After that, a liquid mixture of water and 1-butanol (water:1-butanol = 92:8 by weight) as the second liquid was supplied from the second liquid supply unit at a supply velocity of 330 m/min (flow rate = 2.3 L/min) to produce a clockwise liquid stream as shown in FIG. 3 in the stirring tank. Furthermore, a liquid mixture of water and 1-butanol (water:1-butanol = 92:8 by weight) as a first liquid was supplied from the first liquid supply unit at a supply velocity of 140 m/min (flow rate = 44 L/min) to cause the liquid to overflow through the pressure-sensitive adhesive discharge portion.

In the above state, 50 g of the mixture (A) including the pressure-sensitive adhesive and the substrate was added from above on the side of the stirring tank at the third lateral face.

Consequently, first, the liquid stream produced by supplying the second liquid from the second liquid supply unit loosened the mixture (A) to separate the pressure-sensitive adhesive and the substrate. Subsequently, in the area where the first liquid is supplied from the first liquid supply unit, while the liquid containing the pressure-sensitive adhesive was caused to overflow through the pressure-sensitive adhesive discharge portion and added into the cage-like separation member of the pressure-sensitive adhesive recovery unit, the substrate sank to the lower portion of the stirring tank.

Then, by lifting the cage-like separation member out of the recovery tank of the pressure-sensitive adhesive recovery unit, the pressure-sensitive adhesive was able to be sorted out.

The substrate that had sunk to the lower portion of the stirring tank was able to be sorted out by recovering the substrate using a simplified belt conveyor.

### INDUSTRIAL APPLICABILITY

The sorting device according to the embodiment of the present invention for sorting a pressure-sensitive adhesive and a substrate can be effectively used for, for example, reclamation of a large amount of waste of pressure-sensitive adhesive tape produced, for example, at sites where electrical parts or optical parts are manufactured.

## Claims

1. A sorting device configured to sort, from a mixture (A) including a pressure-sensitive adhesive and a substrate, the pressure-sensitive adhesive and the substrate, the sorting device comprising:
a stirring tank including a first lateral face and a second lateral face facing each other and extending in a longitudinal direction, a third lateral face and a fourth lateral face facing each other and extending in a width direction, and a bottom face;
a stirring device for stirring the mixture (A) in the stirring tank;
a first liquid supply unit configured to supply a first liquid into the stirring tank;
a pressure-sensitive adhesive discharge portion configured to discharge the pressure-sensitive adhesive together with a liquid from an upper part of the first lateral face of the stirring tank;
a pressure-sensitive adhesive recovery unit configured to recover the pressure-sensitive adhesive discharged through the pressure-sensitive adhesive discharge portion; and
a substrate recovery unit configured to recover the substrate from the stirring tank.

2. The sorting device according to claim 1, wherein the first liquid supply unit is disposed so as to supply the first liquid into the stirring tank from above the stirring tank.

3. The sorting device according to claim 1, wherein the first liquid supply unit is disposed on a side at the first lateral face or a side at the second lateral face.

4. The sorting device according to claim 1, wherein the first liquid supply unit includes a plurality of first liquid supply ports.

5. The sorting device according to claim 1, wherein the stirring device enables stirring by a liquid stream generated by supplying a second liquid from a second liquid supply unit into the stirring tank.

6. The sorting device according to claim 5, wherein the second liquid supply unit is disposed on a side at the first lateral face or a side at the second lateral face.

7. The sorting device according to claim 5, wherein the second liquid supply unit includes a plurality of second liquid supply ports horizontally oriented.

8. The sorting device according to claim 6, wherein the first liquid supply unit is disposed on the side at the second lateral face, and the second liquid supply unit is disposed on the side at the first lateral face.

9. The sorting device according to claim 5, comprising a control unit configured to control an amount of the first liquid to be supplied from the first liquid supply unit and an amount of the second liquid to be supplied from the second liquid supply unit.

10. The sorting device according to claim 1, wherein the pressure-sensitive adhesive discharge portion is a cutout provided to the upper part of the first lateral face.

11. The sorting device according to claim 5, wherein a liquid discharged through the pressure-sensitive adhesive discharge portion is recycled into at least one selected from the group consisting of the first liquid and the second liquid.

12. The sorting device according to claim 1, wherein
the pressure-sensitive adhesive recovery unit includes a separation member configured to recover the pressure-sensitive adhesive discharged through the pressure-sensitive adhesive discharge portion and a recovery tank configured to store the liquid discharged through the pressure-sensitive adhesive discharge portion, and
at least a portion of the separation member is immersed in the liquid.
